# EUROPEAN PATENT SPECIFICATION

(11) **EP 2 873 540 B1**
(45) Date of publication and mention of the grant of the patent: **02.09.2020**
(21) Application number: 13816088.2
(22) Date of filing: 12.07.2013
(51) Int. Cl.: B60C 19/00, B60C 23/04, B29D 30/00

(54) **TIRE**
REIFEN
PNEU

(30) Priority: 13.07.2012 JP 2012157203
(43) Date of publication of application: 20.05.2015
(73) Proprietor: Bridgestone Corporation, Tokyo 104-8340 (JP)
(72) Inventor: SHOUYAMA, Yoshinobu, Tokyo 187-8531 (JP)
(74) Representative: Oxley, Robin John George
(86) International application number: PCT/JP2013/069157
(87) International publication number: WO 2014/010728

(56) References cited:
- EP-A1- 0 639 472
- JP-A- H0 867 117
- JP-A- H0 939 520
- JP-A- 2000 168 320
- JP-A- 2002 502 765
- JP-A- 2005 096 423
- JP-A- 2010 269 670
- JP-A- 2011 042 261
- JP-Y2- 2 600 143
- US-A- 3 662 335
- US-A- 3 783 927

## Description

### Technical Field

The present invention relates to a tire in which an electronic device is mounted onto an inner surface of the tire.

### Background Art

In recent years, a tire pressure monitoring system (hereinafter, referred to as a "TPMS") has been mounted on a vehicle, the TPMS being configured in such a manner that an electronic device for measuring an internal pressure of a tire, an internal temperature of the tire or the like is attached to the tire, measured data transmitted from the electronic device by wireless communication is received by a receiving module on the vehicle body side, and tire condition is determined based on the received data or the received data is displayed on an onboard indicator of a vehicle cab. For example, Patent Literature 1 discloses a tire in which an electronic device is mounted to an inner surface of a sidewall portion of the tire. The electronic device is detachably mounted to the inner surface of the tire and thus can be appropriately replaced.

### [Citation List]

### [Patent Literature]

[Patent Literature 1] : JP-T 2002-502765 A (at least in Fig. 1, paragraph [0018]). Attention is also drawn to the disclosures of EP0,639,472 and JP2010269670.

### Summary of Invention

The tire provided with such an electronic device is frequently used in tires for construction equipment or tires for trucks and buses. In particular, the tires for construction equipment easily puncture in comparison with the tires for passenger vehicles. For example, when a tire is punctured or an internal pressure is abnormally decreased due to a trouble of the tire, a sidewall portion is bent and deformed and the sidewall portion may bend in two at a center in a tire radial direction as a base point.

When the sidewall portion is bent at the center in the tire radial direction as the base point, inner surfaces of the sidewall portion of the tire come in contact with each other. Accordingly, as in a tire of Patent Literature 1, the electronic device disposed on the inner surface of the sidewall portion of the tire is interposed between the inner surfaces of the tire, and thus a trouble such as breakage of the electronic device or disengagement of the electronic device may occur.

A rim with a bead seat band is shown by US3783927. The present invention has been made in view of the above problem and an object thereof is to provide a tire capable of suppressing the trouble such as the breakage of the electronic device or the disengagement of the electronic device when the sidewall is deformed due to a puncture of the tire or an abnormal decrease in internal pressure.

To solve the above-mentioned problems, the tire (tire 1) relating to the present invention is as claimed in claim 1.

According to the present invention, it is possible to provide the tire capable of suppressing the trouble such as the breakage of the electronic device or the disengagement of the electronic device when both of the sidewalls are deformed due to the puncture of the tire or the abnormal decrease in internal pressure.

### Brief Description of Drawings

Fig. 1 is a sectional view of a tire orthogonal to a tire circumferential direction and running along a tread width direction.
Fig. 2 is an enlarged sectional view of a portion in which the electronic device of Fig. 1 is mounted.
Fig. 3 is a diagram schematically illustrating a state when a tire is punctured.
Fig. 4 is a diagram schematically illustrating a mounting state of a rim.
Figs. 5 (a) and 5 (b) are diagrams schematically illustrating mounting states of the rim.

### Description of Embodiments

Hereinafter, an example of a tire related to the present invention will be described with reference to the drawing. In the following description of the drawings, the same or similar constituent elements are designated by the same or similar reference numerals. It is to be noted that the drawings are schematic and the dimensions or ratios are different from actual values. Accordingly, specific dimensions and the like should be determined by taking the following description into consideration. Needless to say, a relationship or a ratio of mutual dimensions may differ among the drawings.

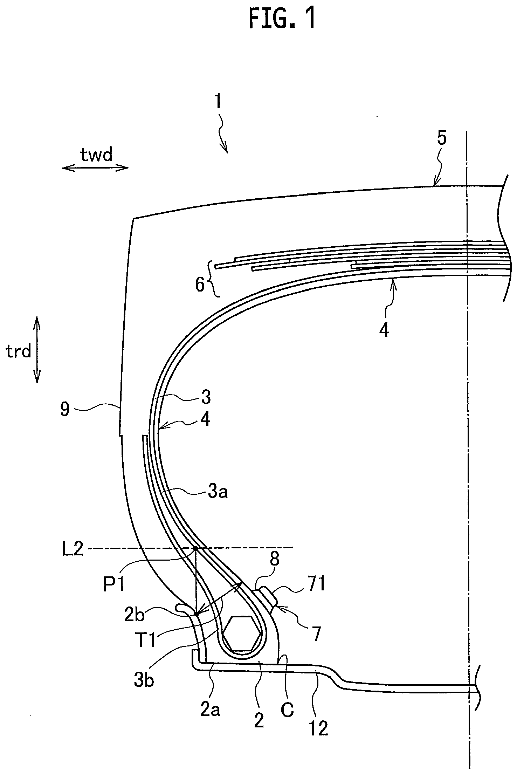

Fig. 1 is a cross sectional view of a tire orthogonal to a tire circumferential direction according to the present embodiment and running along a tread width direction. The tire according to the present embodiment is an off-the-road radial tire (ORR46/90R57).

A tire 1 comprises a pair of bead portions (illustrating only one side thereof) 2, a pair of sidewall portions (illustrating only one side thereof) 9 disposed so as to be connected with the bead portion 2, a tread portion 5 connected to both of the sidewall portions 9, a carcass 3 extending from the tread portion 5 to the bead portion 2, and a belt layer 6 disposed at the outer side of the carcass 3 in a tire radial direction in the tread portion 5.

The bead portion 2 comes in contact with a rim 12 on an inner side in a tire radial direction trd. A surface of the bead portion 2 which comes in contact with the rim 12 is referred to as a rim contact surface 2a. A portion of the rim contact surface 2a which is located on an outer side in the tire radial direction is referred to as an outer rim end portion 2b, which is a separating point in which the rim 12 and the tire 1 are separated from each other.

The carcass 3 includes a ply body 3a which is disposed between the pair of the bead portions 2 and a folded ply 3b which is folded toward the outer side in the tire radial direction at the bead portion 2. An inner liner layer 4 is provided on an inner side of the carcass 3. The inner liner layer 4 is made of a relatively high airtight material corresponding to a tube.

The tread portion 5, which comes in contact with a road surface, is disposed on the outer side of the carcass 3 in the tire radial direction. The belt layer 6 is provided between the tread portion 5 and the carcass 3 and reinforces the tread portion 5. The belt layer 6 is formed of a steel cord of high strength and a plurality of belt layers is stacked along a tire circumferential direction.

An electronic device 7 is provided on an inner surface of the bead portion 2 (inner surface of the tire) and detects internal information of the tire. The electronic device 7 is fixed to the inner surface of the tire through a fixing member 8.

The electronic device 7 includes a detection portion (not illustrated), a communication portion (not illustrated), a storage portion (not illustrated), and a housing 71. The detection portion detects an air pressure of compressed air filled in the tire, an internal temperature of the tire, wear condition of the tire or the like. The communication portion transmits information, which is detected by the detection portion, to a communication apparatus (not illustrated) mounted on a vehicle side. The storage portion is configured by, for example, IC chips and stores identification information (name, date of manufacture, serial number, lot number or the like) of the tire. The housing 71 houses the detection portion, the communication portion, and the storage portion.

The housing 71 is configured by a strong and hard material so as to protect the storage portion or the like which is housed therein. Specifically, the material constituting the housing 71 has preferably Young's modulus of about 7030 kg/cm² (about 10,000 PSI (pound per square inch)) or more.

Furthermore, the electronic device may detect the air pressure of the compressed air filled in the tire, the internal temperature of the tire, the wear condition of the tire or the like to transmit the detected information to the communication apparatus, may store the identification information such as an ID of the tire to send the identification information in response to a request from an external communication apparatus of the tire, and includes an electronic device for various uses. Accordingly, the electronic device may not include the detection portion for detecting the internal information of the tire such as an internal pressure of the tire and may not include the storage portion for holding the identification information of the tire. In addition, the internal information of the tire detected by the detection portion includes the air pressure of the tire, the temperature of the tire, the rotation of the tire, and the identification information such as the ID of the tire.

In addition, the external communication apparatus of the tire may be: an apparatus which can receive and transmit the information from/to the electronic device; a communication apparatus constituting TPMS; a server which stores the internal information of the tire; a dealer terminal which sells vehicles or tires; and a user terminal (car navigation terminal or mobile terminal).

The fixing member 8 is a member which is configured to mount the electronic device 7 to the inner surface of the tire and may be constituted of, for example, ethylene-propylene-diene monomer rubber (EPDM), butyl rubber, natural rubber, a mixture of neoprene rubber and natural rubber, a mixture of chlorobutyl rubber and natural rubber, a mixture of styrene-butadiene rubber (SBR) and natural rubber or the like. More preferably, the fixing member 8 may be made of the mixture of chlorobutyl rubber and natural rubber, and the mixture of styrene-butadiene rubber (SBR) and natural rubber.

In addition, the fixing member may be a member capable of being mounted to the inner surface of the tire, may be a fixing jig, may be an adhesive member, and can be adopted as various configurations.

As a specific configuration, for example, a fixing member can be exemplified which has: a main body portion including a bottom surface coming in contact with the inner surface of the tire, a top surface disposed to face the bottom surface, and a side surface located on sides of the top surface and the bottom surface and a recessed portion is formed on the side surface thereof; a fastener including a pressing portion configured to hold both sides of the electronic device disposed on the top surface of the main body portion and a claw portion caught by the recessed portion; and a screw portion for fixing the fastener.

In a method of mounting the electronic device to the inner surface of the tire using the fixing member with such a configuration, first, the bottom surface of the main body portion is fixed to the inner surface of the tire using an adhesive agent or the like. Next, the claw portion of the fastener is inserted into the recessed portion of the main body portion, and the electronic device is disposed on the top surface of the main body portion, whereby the facing side surface of the electronic device is gripped by the pressing portion. Thereafter, the fastener is fixed by the screw portion. This makes it possible to fix the electronic device to the inner surface of the tire. In addition, the electronic device can be removed from the fixing member by a removal of the screw portion and the fastener. The electronic device is detachably mounted to the tire and thus can be appropriately replaced.

The present embodiment is configured such that only the electronic device of the electronic device and the fixing member is removed from the tire, but is not limited to this configuration. For example, it may be configured such that only the fixing member is removed from the tire and that both of the electronic device and the fixing member are removed from the tire.

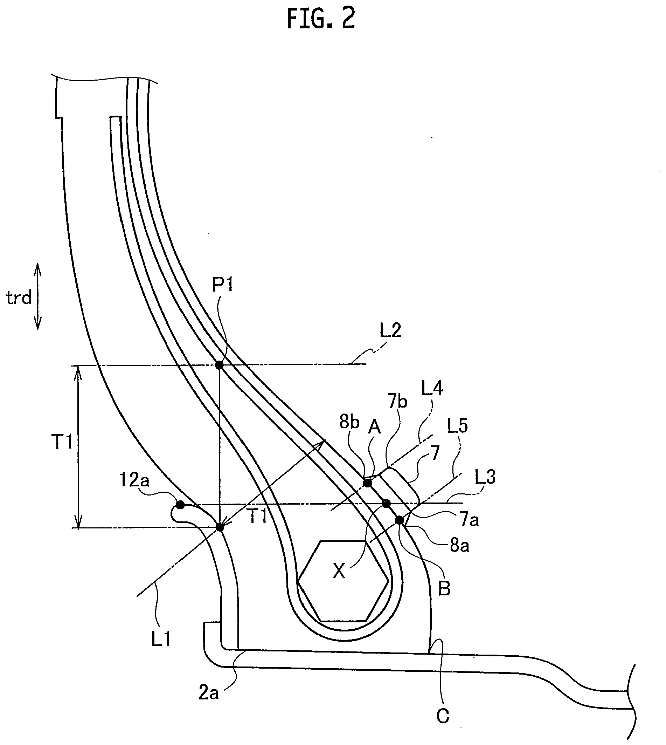

Next, a mounting position of the electronic device will be described with reference to Figs. 1 and 2. The electronic device 7 is disposed to be protruded from the inner surface of the tire while in a state of being mounted to the inner surface of the tire. In a cross section of the tire orthogonal to the tire circumferential direction and running along the tread width direction, an outer end portion (upper end portion illustrated in Figs. 1 and 2) of the electronic device in the tire radial direction is located on an inner side in the tire radial direction of a reference position that is located on the outer side in the tire radial direction from an outer rim end portion 2b, which is located on the outer side in the tire radial direction of the rim contact surface 2a, by a thickness T1 of the bead portion in the outer rim end portion 2b. In Figs. 1 and 2, the reference position is denoted by a reference point P1.

The thickness T1 of the bead portion in the outer rim end portion is a thickness of the bead portion 2 on a first virtual line L1 that passes through the outer rim end portion 2b and extends along a direction orthogonal to the outer surface of the tire. In addition, the reference point P1 is a point that is located on the outer side in the tire radial direction from the outer rim end portion 2b by the thickness T1 of the bead portion in the outer rim end portion 2b. A second virtual line is denoted by L2 in Fig. 2, which passes through the reference point P1 and extends along the tread width direction. A point on the second virtual line L2 is referred to as a reference position.

The electronic device 7 is located on an inner side in the tire radial direction of the reference point P1. By the disposition of the electronic device 7 as described above, it is possible to suppress a trouble such as breakage of the electronic device or disengagement of the electronic device when the sidewall portion is deformed due to a puncture of the tire or an abnormal decrease in internal pressure.

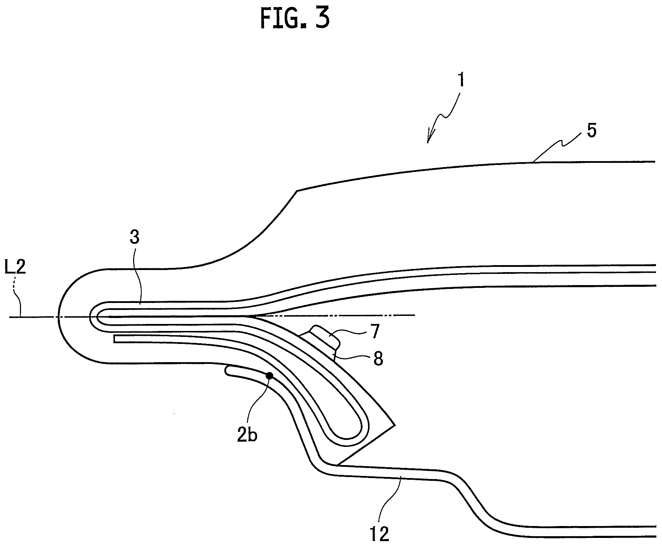

Details will be described with reference to Fig. 3. Fig. 3 illustrates a state where the sidewall portion is bent and deformed due to the puncture of the tire or the abnormal decrease in internal pressure of the tire. When the tire is punctured, the tire is compressed in the tire radial direction trd. Then, the bead portion 2 and the sidewall portion 9 are deformed so as to fall on the outer side in the tread width direction. At this time, the rim contact surface 2a of the bead portion 2 is made of a metal or the like and thus is hardly deformed by the influence of the high rigidity rim compared to the bead portion other than the rim contact surface 2a. However, since a portion of the bead portion 2 which is located on an outer side in the tire radial direction of the outer rim end portion 2b does not come in contact with the rim, it is easily deformed. Similarly, the sidewall portion 9 is located on an outer side in the tire radial direction of the bead portion and does not come in contact with the rim, and thus it is easily deformed.

Accordingly, when the tire is compressed in the tire radial direction, the bending and deformation occurs around the outer rim end portion 2b of the bead portion 2. Then, a portion of the sidewall portion and the bead portion, which is located on an outer side in the tire radial direction of the outer rim end portion, is bent and deformed so as to be protruded outward in the tread width direction and comes in contact with the inner surface of the tire, which is the state illustrated in Fig. 3.

At this time, in the case of not taking compressive deformation of rubber into consideration, a point where the inner surfaces of the tire come in contact with each other is on the second virtual line L2 which passes through the reference point located on the outer side in the tire radial direction from the outer rim end portion by the thickness of the bead portion. Therefore, the inner surfaces of the tire come in contact with each other at a portion of the sidewall portion which is located on an outer side in the tire radial direction of the reference point P1 before deformation (a state before the puncture). Therefore, when the electronic device is located on an outer side in the tire radial direction of the reference point P1 before the deformation (the state before the puncture), the electronic device 7 may be wrecked and be out of order by the inner surface of the tire or the electronic device may collide with the inner surface of the tire facing the electronic device, thereby being disengaged from the inner surface of the tire.

However, as in the tire according to the present embodiment, when the electronic device is located on an inner side in the tire radial direction of the reference point P1, it is possible to suppress the electronic device from colliding with the facing inner surface of the tire and thus to suppress the trouble in that the electronic device is broken or the electronic device is disengaged even when the tire is deformed due to the puncture of the tire and thus the inner surfaces of the tire come in contact with each other.

In addition, in the cross section of the tire orthogonal to the tire circumferential direction and running along the tread width direction, an outer end 8b of a fixing member 8 in the tire radial direction is located on an inner side in the tire radial direction of the reference point P1. Since the fixing member 8 is located on an inner side in the tire radial direction of the reference point P1, it is possible to suppress the fixing member 8 from colliding with the inner surface of the tire and thus to suppress the trouble in that the fixing member 8 is broken or the fixing member 8 is disengaged even when the tire is punctured and thus the inner surfaces of the tire come in contact with each other.

Further, in the cross section illustrated in Fig. 2, when an intersection point between a third virtual line L3 which passes through an outer end portion 12a of the rim 12 in the tire radial direction and is orthogonal to the tire radial direction and the inner surface of the tire is represented as X, an intersection point between a fourth virtual line L4 which passes through an outer end portion 7b of the electronic device in the tire radial direction and is orthogonal to the inner surface of the tire and the inner surface of the tire is represented as A, an intersection point between a fifth virtual line L5 which passes through an inner end portion 7a of the electronic device 7 in the tire radial direction and is orthogonal to the inner surface of the tire and the inner surface of the tire is represented as B, and a toe portion of a tip (inner end of the tire radial direction portion) of the bead portion 2 is represented as C, a distance "A - X" between the point "A" and the point "X" in the tire radial direction is preferably 50.8 mm (2 inches) or less (in a case where a numerical value is positive if the point A is located on an outer side of the point X in the tire radial direction), for example, the electronic device 7 may be mounted such that the condition of A - X = 0 mm is satisfied. Alternatively, the electronic device 7 may be mounted such that the point A is located on an inner side of the point X in the tire radial direction. In addition, a distance "C - B" between the toe portion C and the point B in the tire radial direction is preferably 76.2 mm (3 inches) or more, for example, the electronic device 7 may be mounted such that the distance "C - B" is 101.6 mm (4 inches). Furthermore, the outer end portion 12a of the rim 12 in the tire radial direction corresponds to an outer end of a rim flange in the tire radial direction which will be described below.

In a case where the numerical value is positive if the point A is located on an outer side of the point X in the tire radial direction (a numerical value is negative if the point A is located in the bead side relative to the point X), the electronic device is mounted such that the distance "A - X" is 50.8 mm or less, and thus the flanges of the rim 12 can come in contact with a tread surface with the bead portion 2, the sidewall portion 9 and the like interposed therebetween when the internal pressure of the tire is decreased due to the puncture or the like to support the load applied to the tire, thereby avoiding the contact between the electronic device 7 and the inner surface of the tire. Accordingly, it is possible to prevent the trouble such as the disengagement of the electronic device 7 from the fixing member 8, or the damage to the electronic device 7 itself.

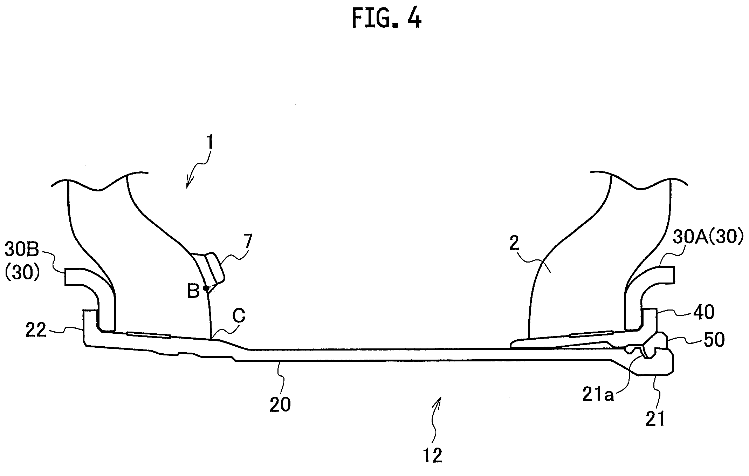

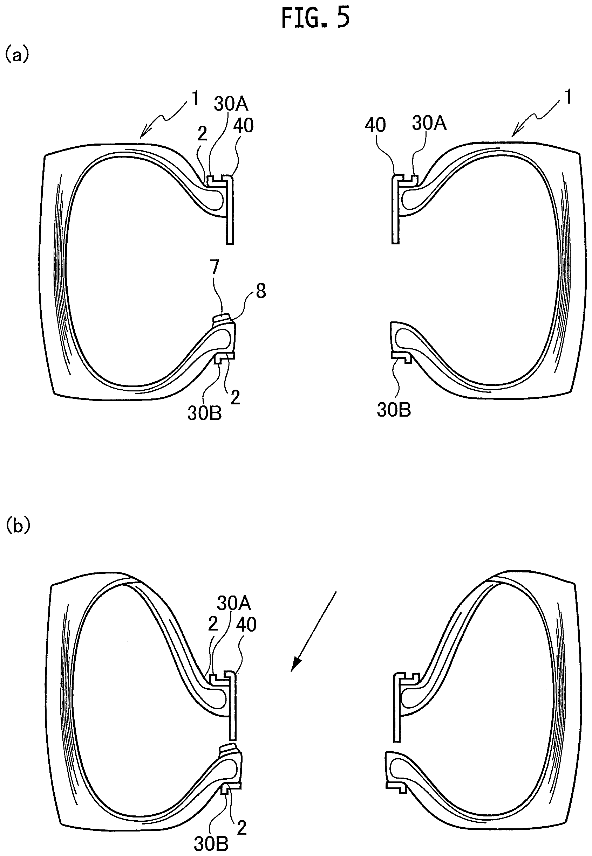

Figs. 4 and Figs. 5(a) and 5(b) are diagrams in which mounting ways of the rim are schematically illustrated. Unlike a rim of a passenger car, a rim for a heavy duty tire is generally configured by a plurality of members. The following description is a case where the tire 1 is a heavy duty tire and the rim 12 is a rim for the heavy duty tire.

As illustrated in Fig. 4, the rim 12 includes a rim base 20 that supports an innermost surface of the bead portion 2 in the tire radial direction, a rim flange 30 that supports the outer surface of the bead portion 2, and a bead seat band 40 that fixes the rim flange 30 to the rim base 20. The rim base 20 includes a gutter band portion 21 having a groove 21a and a flange-shaped end 22. The rim flange 30 includes rim flanges 30A and 30B. Here, for convenience, a rim flange that is fixed to the rim base 20 through the bead seat band 40 is referred to as the rim flange 30A and a rim flange that is fixed to the rim base 20 in the flange-shaped end 22 is referred to as the rim flange 30B. The electronic device 7 is mounted to the inner surface of the tire through the fixing member 8 in the bead portion 2 on the side to which the rim flange 30B is mounted. The rim 12 is assembled to the tire 1 in this order of the rim flange 30 (rim flanges 30A and 30B), the bead seat band 40, and the rim base 20.

When the rim 12 is assembled to the tire 1, the bead seat band 40 is mounted from the outer side of the rim flange 30A in the tread width direction as illustrated in Fig. 5(a) after the rim flange 30 (rim flanges 30A and 30B) is mounted to the outer surface of the bead portion 2. Specifically, the bead seat band 40 is mounted to the tire 1 in such a manner that the bead seat band 40 is pushed toward the other side surface (a side to which the rim flange 30B is mounted) of the tire in a state where the bead seat band 40 is disposed on one side surface of the tire to which the rim flange 30A is mounted. At this time, when the bead seat band 40 is not straightly inserted along the tread width direction (for example, when the bead seat band 40 is inserted in an arrow direction illustrated in Fig. 5(b)), the tip of the bead seat band 40 comes in contact with the electronic device 7 mounted to the facing bead portions 2. However, when the electronic device 7 is located on an outer side in the tire radial direction of the inner end (toe portion C) of the bead portion 2 in the tire radial direction, it is possible to suppress the contact between the bead seat band 40 and the electronic device during the assembly of the rim and thus to suppress the trouble such as the breakage of the electronic device or the disengagement of the electronic device.

Further, the inner end of the bead portion 2 in the tire radial direction is a portion of the bead portion which is located on the innermost side in the tire radial direction, on the inner surface (to which the electronic device is mounted) side of the tire, and is indicated by the toe portion C illustrated in Figs. 1 and 2.

Specifically, the inner end of the electronic device 7 in the tire radial direction is located on an outer side in the tire radial direction of the outer end of the bead seat band 40 in the tire radial direction at the time of mounting the rim 12. More specifically, the bead seat band 40 comes in contact with the inner surface of the tire opposite to an insertion side of the rim during the assembly of the rim in the range of 76.2 mm or less from the toe portion C to the outer side in the tire radial direction. Accordingly, when the electronic device 7 is mounted such that the distance "C - B" is 76.2 mm or more, it is possible to suppress the contact between the rim 12 and the electronic device 7 and thus to prevent the trouble such as the disengagement of the electronic device 7 from the fixing member 8, or the damage to the electronic device 7 itself.

Furthermore, the fixing member 8 may be configured to be located on an outer side in the tire radial direction of the inner end (toe portion C) of the bead portion in the tire radial direction. It is possible to suppress the contact between the rim (bead seat band 40) and the fixing member 8 during the assembly of the rim and thus to suppress the trouble such as the breakage of the fixing member 8 or the disengagement of the fixing member 8.

The mounting position of the electronic device and the fixing member indicates a position when the pneumatic tire 1 is mounted to a standard rim, as defined in the JATMA YEAR BOOK (2009 edition, Japan Automobile Tyre Manufacturers Association standards), inflated to an internal pressure of 100% of the air pressure (maximum pressure) corresponding to maximum load capability (load indicated by bold characters in the internal pressure-load correspondence table) in the JATMA YEAR BOOK for the applicable size/ply rating, and applied with the maximum load. When TRA standards or ETRTO standards is used in the location of use or manufacturing location, the respective standards are applied.

### [Example]

Next, an Example performed using a tire according to following Example and a tire according to Comparative Examples will be described in order to further clarify the effects of the present invention. The present invention is not limited to these examples.

### (1) Test method

The existence of the trouble in the electronic device and the fixing member during the puncture was verified using three tires in which the electronic device was differently located.

In the tire according to the Example, the electronic device was mounted at a position of A - X = 0 mm and C - B = 101.6 mm (4 inches).

In the tire according to Comparative Example 1, the electronic device was mounted at a position of A - X = 406.4 mm (16 inches) and C - B = 355.6 mm (14 inches).

In the tire according to Comparative Example 2, the electronic device was mounted at a position of A - X = -76.2 mm (3 inches) and C - B = 25.4 mm (1 inch).

### (2) Evaluation results

In the tire according to the Example and the tire according to Comparative Example 2, abnormality of the electronic device 7 and the fixing member 8 was not observed when the tire was punctured and the electronic device 7 could be directly used after the repair of the punctured tire. Meanwhile, in the tire of Comparative Example 1, the electronic device 7 and the fixing member 8 were damaged when the tire was punctured and it was necessary that new patch and electronic device were mounted to the tire after the repair of the punctured tire.

Further, in the tire according to the Example and the tire according to Comparative Example 1, the abnormality of the electronic device and the fixing member did not occur during the assembly of the rim and the electronic device could be used. Meanwhile, in about half the tires according to Comparative Example 2, the rim (bead seat band) and the electronic device came in contact with each other and thus the electronic device or the fixing member was damaged when the rim was inserted into the tire.

In the electronic device according to the present embodiment, the effects of the invention were found without generating the trouble in both when the tire was punctured and when the rim was inserted into the tire.

As mentioned above, it must be understood that the present invention includes various embodiments and the like that are not described herein. Accordingly, the scope of the present invention shall be defined only by the matters according to the claims that are appropriate from the description above.

This application claims priority to JP 2012-157203 (filed on July 13, 2012).

### [Industrial Applicability]

The present invention relates to a tire which is capable of suppressing the trouble such as the breakage of the electronic device or the disengagement of the electronic device when both of the sidewalls are deformed due to the puncture of the tire or the abnormal decrease in internal pressure, it is particularly useful for tires for construction equipment or tires for trucks and buses.

## Claims

1. A tire assembly comprising:
a tire (1) including a pair of bead portions (2) and an electronic device (7) that is mounted onto an inner surface of the tire (1); and
a rim (12) assembled to the tire (1),
wherein the bead portions (2) are provided with a rim contact surfaces (2a) being in contact with the rim (12), and
in a cross section of the tire (1) orthogonal to a tire circumferential direction and running along a tread width direction (twd), an outer end portion of the electronic device (7) in a tire radial direction (trd) is located on an inner side in the tire radial direction (trd) of a reference position (P1) that is located on an outer side in the tire radial direction (trd) of an outer rim end portion (2a), which is located on an outer side in the tire radial direction (trd) of the rim contact surface (2a), by a thickness (T1) of the bead portion (2) in the outer rim end portion (2b),
**characterised in that**:
the rim (12) includes a rim base (20) that supports an innermost surface of the bead portion (2) in the tire radial direction (trd), a rim flange (30) that supports an outer surface of the bead portion (2), and a bead seat band (40) that fixes the rim flange (30) to the rim base (20), and
an inner end portion (7a) of the electronic device (7) in the tire radial direction (trd) is located on an outer side in the tire radial direction (trd) of an outer end portion of the bead seat band (40) in the tire radial direction (trd) when mounting the rim (12).

2. The tire assembly according to claim 1, wherein in the cross section of the tire (1) orthogonal to the tire circumferential direction and running along the tread width direction (twd), the electronic device (7) is located on an outer side in the tire radial direction (trd) of an inner end portion (C) of the bead portion (2) in the tire radial direction (trd).

3. The tire assembly according to claim 1, wherein
a distance "A - X" between a point "A" and a point "X" in the tire radial direction (trd) in the cross section of the tire (1) orthogonal to the tire circumferential direction and running along the tread width direction (twd), is 50.8 mm or less when mounting the rim (12), wherein an intersection point of a virtual line (L3) which passes through an outer end portion of the rim in the tire radial direction (12a), and which is orthogonal to the tire radial direction (trd), and the inner surface of the tire (1) is represented as X, and an intersection point of a virtual line (L4) which passes through an outer end portion (7b) of the electronic device (7) in the tire radial direction (trd) and which is orthogonal to the inner surface of the tire (1), and the inner surface of the tire (1) is represented as A.

4. The tire assembly according to claim 1, wherein
the electronic device (7) is mounted to the inner surface of the tire (1) through a fixing member (8), and
in the cross section of the tire orthogonal to the tire circumferential direction and running along the tread width direction (twd), an outer end portion (8b) of the fixing member (8) in the tire radial direction (trd) is located on an inner side in the tire radial direction (trd) of the reference position (P1).

5. The tire assembly according to claim 4, wherein in the cross section of the tire orthogonal to the tire circumferential direction and running along the tread width direction (twd), the fixing member (8) is located on an outer side in the tire radial direction (trd) of an inner end portion (C) of the bead portion (2) in the tire radial direction (trd).

6. The tire assembly according to any one of the preceding claims, wherein a distance in the tire radial direction (trd) between the inner end portion (7a) of the electronic device (7) in the tire radial direction (trd) and an inner end portion (C) of the bead portion (2) in the tire radial direction (trd) is 76.2 mm or more.

7. The tire assembly according to claim 4, wherein at least either the electronic device (7) or the fixing member (8) is detachably mounted to the inner surface of the tire (1).

## Patentansprüche

1. Reifenbaugruppe, die Folgendes umfasst:
einen Reifen (1), der ein Paar von Wulstabschnitten (2) und eine elektronische Vorrichtung (7), die an einer Innenfläche des Reifens (1) angebracht ist, einschließt, und
eine Felge (12), die an dem Reifen (1) montiert ist,
wobei die Wulstabschnitte (2) mit Felgenberührungsflächen (2a) versehen sind, die sich in Berührung mit der Felge (12) befinden, und,
in einem Querschnitt des Reifens (1), senkrecht zu einer Reifenumfangsrichtung und verlaufend entlang einer Laufflächen-Breitenrichtung (twd), ein äußerer Endabschnitt der elektronischen Vorrichtung (7) in einer Reifenradialrichtung (trd) auf einer in der Reifenradialrichtung (trd) inneren Seite einer Referenzposition (P1) angeordnet ist, die auf einer in der Reifenradialrichtung (trd) äußeren Seite eines äußeren Felgenendabschnitts (2a) angeordnet ist, der auf einer in der Reifenradialrichtung (trd) äußeren Seite der Felgenberührungsfläche (2a) angeordnet ist, um eine Dicke (T1) des Wulstabschnitts (2) in dem äußeren Felgenendabschnitt (2b),
**dadurch gekennzeichnet, dass**:
die Felge (12) ein Felgenbett (20), das eine in der Reifenradialrichtung (trd) innerste Fläche des Wulstabschnitts (2) stützt, ein Felgenhorn (30), das eine Außenfläche des Wulstabschnitts (2) stützt, und ein Wulstsitzband (40), welches das Felgenhorn (30) an dem Felgenbett (20) befestigt, einschließt, und
ein in der Reifenradialrichtung (trd) innerer Endabschnitt (7a) der elektronischen Vorrichtung (7) auf einer in der Reifenradialrichtung (trd) äußeren Seite eines in der Reifenradialrichtung (trd) äußeren Endabschnitts des Wulstsitzbandes (40) angeordnet ist, wenn die Felge (12) montiert wird.

2. Reifenbaugruppe nach Anspruch 1, wobei in dem Querschnitt des Reifens (1), senkrecht zu der Reifenumfangsrichtung und verlaufend entlang der Laufflächen-Breitenrichtung (twd), die elektronische Vorrichtung (7) auf einer in der Reifenradialrichtung (trd) äußeren Seite eines in der Reifenradialrichtung (trd) inneren Endabschnitts (C) des Wulstabschnitts (2) angeordnet ist.

3. Reifenbaugruppe nach Anspruch 1, wobei
eine Entfernung "A - X" zwischen einem Punkt "A" und einem Punkt "X" in der Reifenradialrichtung (trd) in dem Querschnitt des Reifens (1), senkrecht zu der Reifenumfangsrichtung und verlaufend entlang der Laufflächen-Breitenrichtung (twd), 50,8 mm oder weniger beträgt, wenn die Felge (12) montiert wird, wobei ein Schnittpunkt einer virtuellen Linie (L3), die durch einen in der Reifenradialrichtung (12a) äußeren Endabschnitt der Felge hindurchgeht und die senkrecht zu der Reifenradialrichtung (12a) ist, und der Innenfläche des Reifens (1) als X dargestellt wird, und ein Schnittpunkt einer virtuellen Linie (L4), die durch einen in der Reifenradialrichtung (trd) äußeren Endabschnitt (7b) der elektronischen Vorrichtung (7) hindurchgeht und die senkrecht zu der Innenfläche des Reifens (1) ist, und der Innenfläche des Reifens (1) als A dargestellt wird.

4. Reifenbaugruppe nach Anspruch 1, wobei
die elektronische Vorrichtung (7) durch ein Befestigungselement (8) an der Innenfläche des Reifens (1) angebracht ist und
in dem Querschnitt des Reifens, senkrecht zu der Reifenumfangsrichtung und verlaufend entlang der Laufflächen-Breitenrichtung (twd), ein in der Reifenradialrichtung (trd) äußerer Endabschnitt (8b) des Befestigungselements (8) auf einer in der Reifenradialrichtung (trd) inneren Seite der Referenzposition (P1) angeordnet ist.

5. Reifenbaugruppe nach Anspruch 4, wobei in dem Querschnitt des Reifens, senkrecht zu der Reifenumfangsrichtung und verlaufend entlang der Laufflächen-Breitenrichtung (twd), das Befestigungselement (8) auf einer in der Reifenradialrichtung (trd) äußeren Seite eines in der Reifenradialrichtung (trd) inneren Endabschnitts (C) des Wulstabschnitts (2) angeordnet ist.

6. Reifenbaugruppe nach einem der vorhergehenden Ansprüche, wobei eine Entfernung in der Reifenradialrichtung (trd) zwischen dem in der Reifenradialrichtung (trd) inneren Endabschnitt (7a) der elektronischen Vorrichtung (7) und einem in der Reifenradialrichtung (trd) inneren Endabschnitt (C) des Wulstabschnitts (2) 76,2 mm oder mehr beträgt.

7. Reifenbaugruppe nach Anspruch 4, wobei mindestens entweder die elektronische Vorrichtung (7) oder das Befestigungselement (8) abnehmbar an der Innenfläche des Reifens (1) angebracht ist.

## Revendications

1. Ensemble de bandage pneumatique, comprenant :
un bandage pneumatique (1) incluant une paire de parties de talon (2) et un dispositif électronique (7) monté sur une surface interne du bandage pneumatique (1) ; et
une jante (12) assemblée sur le bandage pneumatique (1) ;
dans lequel les parties de talon (2) comportent des surfaces en contact avec la jante (2a), se trouvant en contact avec la jante (12) ; et
dans une section transversale du bandage pneumatique (1), orthogonale à une direction circonférentielle du bandage pneumatique et s'étendant le long d'une direction de la largeur de la bande de roulement (twd), une partie d'extrémité externe du dispositif électronique (7), dans une direction radiale du bandage pneumatique (trd), est agencée sur un côté interne, dans la direction radiale du bandage pneumatique (trd), d'une position de référence (P1) agencée sur un côté externe, dans la direction radiale du bandage pneumatique (trd), d'une partie d'extrémité externe de la jante (2a), agencée sur un côté externe, dans la direction radiale du bandage pneumatique (trd), de la surface en contact avec la jante (2a), par une épaisseur (T1) de la partie de talon (2) dans la partie d'extrémité externe de la jante (2b) ;
**caractérisé en ce que** :
la jante (12) inclut une base de jante (20) supportant une surface interne extrême de la partie de talon (2) dans la direction radiale du bandage pneumatique (trd), un rebord de jante (30) supportant une surface externe de la partie de talon (2), et une bande de portée de talon (40) fixant le rebord de jante (30) sur la base de jante (20) ; et
une partie d'extrémité interne (7a) du dispositif électronique (7), dans la direction radiale du bandage pneumatique (trd), est agencée sur un côté externe, dans la direction radiale du bandage pneumatique (trd), d'une partie d'extrémité externe de la bande de portée de talon (40), dans la direction radiale du bandage pneumatique (trd), lors du montage de la jante (12).

2. Ensemble de bandage pneumatique selon la revendication 1, dans lequel, dans la section transversale du bandage pneumatique (1) orthogonale à la direction circonférentielle du bandage pneumatique et s'étendant le long de la direction de la largeur de la bande de roulement (twd), le dispositif électronique (7) est agencé sur un côté externe, dans la direction radiale du bandage pneumatique (trd), d'une partie d'extrémité interne (C) de la partie de talon (2), dans la direction radiale du bandage pneumatique (trd).

3. Ensemble de bandage pneumatique selon la revendication 1, dans lequel :
une distance « A-X » entre un point « A » et un point « X » , dans la direction radiale du bandage pneumatique (trd), dans la section transversale du bandage pneumatique (1) orthogonale à la direction circonférentielle du bandage pneumatique, et s'étendant le long de la direction de la largeur de la bande de roulement (twd), correspond à 50,8 mm ou moins lors du montage de la jante (12), dans lequel un point d'intersection d'une ligne virtuelle (L3) passant à travers une partie d'extrémité externe de la jante, dans la direction radiale du bandage pneumatique (12a), et orthogonale à la direction radiale du bandage pneumatique (12a), et la surface interne du bandage pneumatique (1), est représenté par X, et un point d'intersection d'une ligne virtuelle (L4) passant à travers une partie d'extrémité externe (7b) du dispositif électronique (7), dans la direction radiale du bandage pneumatique (trd), et orthogonale à la surface interne du bandage pneumatique (1), et la surface interne du bandage pneumatique (1) étant représenté par A.

4. Ensemble de bandage pneumatique selon la revendication 1, dans lequel :
le dispositif électronique (7) est monté sur la surface interne du bandage pneumatique (1) par l'intermédiaire d'un élément de fixation (8) ; et
dans la section transversale du bandage pneumatique, orthogonale à la direction circonférentielle du bandage pneumatique et s'étendant le long de la direction de la largeur de la bande de roulement (twd), une partie d'extrémité externe (8b) de l'élément de fixation (8), dans la direction radiale du bandage pneumatique (trd), est agencée sur un côté interne, dans la direction radiale du bandage pneumatique (trd), de la position de référence (P1).

5. Ensemble de bandage pneumatique selon la revendication 4, dans lequel, dans la section transversale du bandage pneumatique orthogonale à la direction circonférentielle du bandage pneumatique et s'étendant le long de la direction de la largeur de la bande de roulement (twd), l'élément de fixation (8) est agencé sur un côté externe, dans la direction radiale du bandage pneumatique (trd), d'une partie d'extrémité interne (C) de la partie de talon (2), dans la direction radiale du bandage pneumatique (trd).

6. Ensemble de bandage pneumatique selon l'une quelconque des revendications précédentes, dans lequel une distance, dans la direction radiale du bandage pneumatique (trd), entre la partie d'extrémité interne (7a) du dispositif électronique (7), dans la direction radiale du bandage pneumatique (trd), et une partie d'extrémité interne (C) de la partie de talon (2), dans la direction radiale du bandage pneumatique (trd), correspond à 76,2 mm ou plus.

7. Ensemble de bandage pneumatique selon la revendication 4, dans lequel au moins soit le dispositif électronique (7), soit l'élément de fixation (8), est monté de manière détachable sur la surface interne du bandage pneumatique (1).
